# EUROPEAN PATENT APPLICATION

(11) **EP 4 799 877 A1**
(43) Date of publication of application: **02.09.2026**
(21) Application number: 26157251.5
(22) Date of filing: 09.02.2026
(51) Int. Cl.: B60R 25/24

(54) **VEHICLE**

(30) Priority: 28.02.2025 JP 2025031969
(71) Applicant: Toyota Jidosha Kabushiki Kaisha, Toyota-shi, Aichi-ken 471-8571 (JP)
(72) Inventor: KOBAYASHI, Junya, Toyota-shi, 471-8571 (JP); HOMMA, Hiroki, Toyota-shi, 471-8571 (JP); MATSUMOTO, Satoshi, Toyota-shi, 471-8571 (JP); MURASE, Junji, Ohguchi-cho, 480-0195 (JP); MORI, Yuki, Ohguchi-cho, 480-0195 (JP); HASEGAWA, Yosuke, Ohguchi-cho, 480-0195 (JP)
(74) Representative: J A Kemp LLP

(57) **Abstract**

In a vehicle, a device configured to store information relating to a digital key is registered as the digital key. The vehicle includes a storage device configured to store a range of functions of the vehicle executable by the digital key and an execution device that changes the range of functions of the vehicle executable by the digital key during periods other than a usage period to be narrower than the range of functions of the vehicle executable by the digital key during the usage period. The usage period is a period in which a user of the digital key uses the vehicle.

## Description

### CROSS-REFERENCE TO RELATED APPLICATIONS

This application is based upon and claims the benefit of priority from Japanese Patent Application No. 2025-031969, filed on February 28, 2025, the entire contents of which are incorporated herein by reference.

### BACKGROUND

### 1. Field

The present disclosure relates to a vehicle.

### 2. Description of Related Art

JP2024-001720A discloses a digital key management system that uses a device, such as a smartphone, as a key for a vehicle. The management system causes the vehicle and the device to store information relating to a digital key. As a result, the device registered as the digital key enables the associated vehicle to be used without requiring a dedicated physical key for the vehicle. In the management system, a device that stores information relating to the digital key of the vehicle is configured to issue a registration request to enable a device of another user to function as the digital key for the vehicle. In this manner, the management system is configured to enable a device of another user to be registered in the vehicle as the digital key for the vehicle. That is, in the management system, the digital key for the vehicle enables generation of a new digital key for the vehicle. Thus, the management system allows the vehicle to be lent to another person without requiring the delivery of a physical key dedicated to the vehicle.

When lending a vehicle, there is a need to restrict the period during which the borrower is allowed to use the vehicle. In the above management system, however, the user who has been lent the vehicle by means of the newly generated digital key uses the vehicle without limitation.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

An aspect of the present disclosure provides a vehicle. In the vehicle, a device configured to store information relating to a digital key is registered as the digital key. The vehicle includes a storage device configured to store a range of functions of the vehicle executable by the digital key, and an execution device configured to change the range of functions of the vehicle executable by the digital key during periods other than a usage period to be narrower than the range of functions of the vehicle executable by the digital key during the usage period. The usage period is a period in which a user of the digital key uses the vehicle.

Other features and aspects will be apparent from the following detailed description, the drawings, and the claims.

### BRIEF DESCRIPTION OF THE DRAWINGS

Fig. 1 is a schematic diagram showing a digital key management system according to a first embodiment.
Fig. 2 is a schematic diagram illustrating owner key information stored in the owner device shown in Fig. 1.
Fig. 3 is a schematic diagram illustrating shareable key information stored in the shareable key shown in Fig. 1.
Fig. 4 is a schematic diagram illustrating data in the database of the management server shown in Fig. 1.
Fig. 5 is a sequence diagram of an owner key registration process executed by the management system shown in Fig. 1.
Fig. 6 is a sequence diagram of a friend key registration process executed by the management system shown in Fig. 1.
Fig. 7 is a sequence diagram of a guest key registration process executed by the management system shown in Fig. 1.
Fig. 8 is a flowchart illustrating a series of processes in which the vehicle shown in Fig. 1 changes the range of functions of the vehicle executable by the digital key.
Fig. 9 is a sequence diagram of a digital key deletion process executed by the management system shown in Fig. 1.
Fig. 10 is a flowchart illustrating a series of processes in which the vehicle according to a second embodiment changes the range of functions of the vehicle executable by the digital key.
Fig. 11 is a sequence diagram illustrating a series of processes in which the vehicle according to a third embodiment changes the range of functions of the vehicle executable by the digital key.
Fig. 12 is a sequence diagram illustrating a series of processes in which the vehicle according to a fourth embodiment changes the range of functions of the vehicle executable by the digital key.
Fig. 13 is a schematic diagram illustrating a specific area according to a fifth embodiment.

Throughout the drawings and the detailed description, the same reference numerals refer to the same elements. The drawings may not be to scale, and the relative size, proportions, and depiction of elements in the drawings may be exaggerated for clarity, illustration, and convenience.

### DETAILED DESCRIPTION

This description provides a comprehensive understanding of the methods, apparatuses, and/or systems described. Modifications and equivalents of the methods, apparatuses, and/or systems described are apparent to one of ordinary skill in the art. Sequences of operations are exemplary, and may be changed as apparent to one of ordinary skill in the art, with the exception of operations necessarily occurring in a certain order. Descriptions of functions and constructions that are well known to one of ordinary skill in the art may be omitted.

Exemplary embodiments may have different forms, and are not limited to the examples described. However, the examples described are thorough and complete, and convey the full scope of the disclosure to one of ordinary skill in the art.

In this specification, "at least one of A and B" should be understood to mean "only A, only B, or both A and B."

### First Embodiment

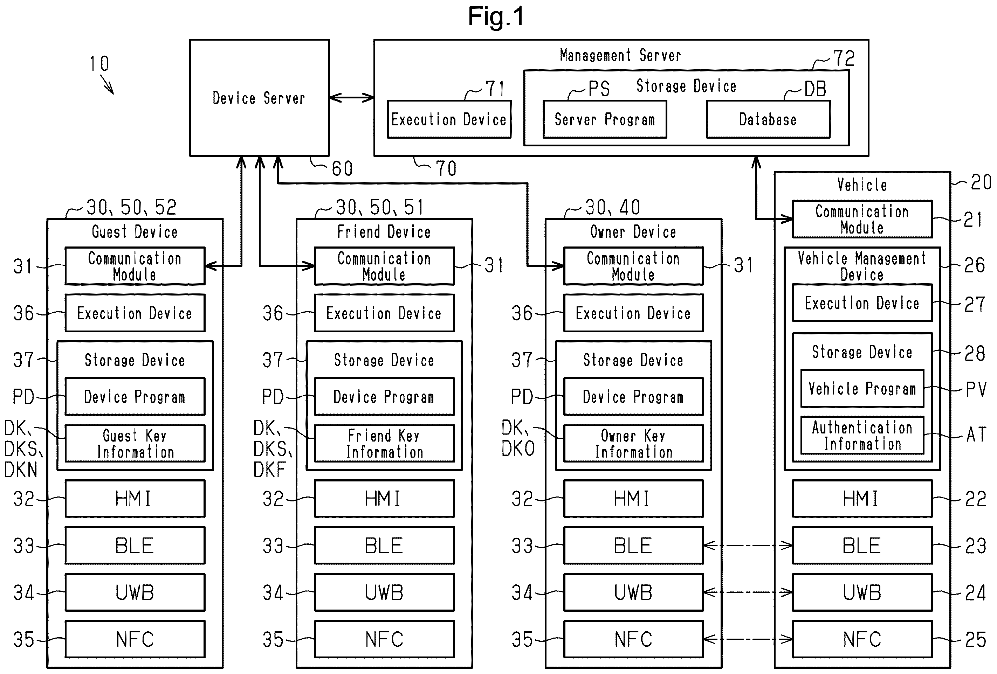

A digital key management system including a vehicle 20 according to a first embodiment will now be described with reference to Figs. 1 to 9.

### Overview of Management System 10

As shown in Fig. 1, a management server 70 is one of the devices forming the management system 10. The management server 70 communicates with a vehicle 20 and multiple devices 30 to manage information relating to multiple digital keys that can be registered in the vehicle 20. In relation to digital keys, the Car Connectivity Consortium (CCC) has established standards. The digital key-related aspects in the present embodiment are based on compliance with the CCC standard. However, they are also applicable to standards and systems other than CCC standard. The management system 10 includes a vehicle 20, multiple devices 30, a device server 60, and the management server 70.

Each vehicle 20 includes a communication module 21, a human machine interface (HMI) 22, a Bluetooth Low Energy (BLE) module 23, an ultra-wideband (UWB) module 24, a near-field communication (NFC) module 25, and a vehicle management device 26.

The communication module 21 communicates with the management server 70 via a wireless communication line. The HMI 22 includes an input device and a presentation device. When the input device receives a user operation of the vehicle 20, the input device outputs a signal indicating the operation to the vehicle 20. The presentation device is configured to present information to the user via images, sounds, or other media. The presentation device is, for example, a monitor and a speaker.

The BLE module 23 performs short-range wireless communication with the devices 30 via BLE communication. The UWB module 24 performs short-range wireless communication with the devices 30 via UWB communication. The UWB module 24 measures the distance between each device 30 and a corresponding vehicle 20. The NFC module 25 performs short-range wireless communication with the devices 30 via NFC communication.

The vehicle management device 26 is installed in the vehicle 20. The vehicle management device 26 manages the digital keys of the vehicle 20. The vehicle management device 26 is, for example, a digital key ECU. The vehicle management device 26 includes an execution device 27 and a storage device 28. The execution device 27 is processing circuitry including one or more processors that execute various processes according to computer programs (software). The storage device 28 stores a vehicle program PV and authentication information AT. The vehicle program PV causes the execution device 27 to store and delete the authentication information AT. The authentication information AT relates to digital keys. Specifically, the authentication information AT is used to authenticate a digital key so that control of the vehicle 20 using the digital key is enabled during use. The authentication information AT is provided for each digital key to be authenticated. The execution device 27 includes a CPU. The execution device 27 executes the vehicle program PV to execute processes relating to storage and deletion of the authentication information AT.

When the vehicle management device 26 authenticates a digital key, the vehicle management device 26 enables the authenticated digital key to control the vehicle 20. For example, when the vehicle management device 26 authenticates a digital key, the vehicle management device 26 enables unlocking of the vehicle 20. For example, when the vehicle management device 26 authenticates a digital key, the vehicle management device 26 enables starting of the vehicle 20.

Each device 30 may be a portable information terminal, such as a smartphone. The device 30 includes a communication module 31, an HMI 32, a BLE module 33, a UWB module 34, an NFC module 35, an execution device 36, and a storage device 37.

The communication module 31 communicates with the device server 60 via a wireless communication line. The HMI 32 includes an input device and a presentation device. When the input device receives an operation performed by a user of the device 30, the input device outputs a signal indicating the operation to the device 30. The presentation device is configured to present information to the user via images, sounds, or other media. The presentation device is, for example, a monitor and a speaker.

The BLE module 33 performs short-range wireless communication with a vehicle 20 via BLE communication. The UWB module 34 performs short-range wireless communication with the vehicle 20 via UWB communication. The NFC module 35 performs short-range wireless communication with the vehicle 20 via NFC communication.

The storage device 37 stores a device program PD and key information DK. The device program PD is executed by the execution device 36 to cause the execution device 36 to store and delete the key information DK. The key information DK includes information that indicates a digital key.

The device program PD includes, for example, a device application and a digital key framework. The device application is used to store and delete the key information DK. The digital key framework is a program that provides functions of pairing of the devices 30 and sharing of digital keys by using an API built into the OS. The execution device 36 executes the device program PD to execute processes relating to storage and deletion of the key information DK. The execution device 36 is processing circuitry including one or more processors that execute various processes according to computer programs (software).

The devices 30 include an owner device 40 that belongs to the owner of a vehicle 20. The owner device 40 stores owner key information DKO as the key information DK. The owner key information DKO indicates an owner key KO. The owner key KO is a digital key, and only one owner key KO is allowed to be registered to a single vehicle 20. Thus, only one owner key KO is assigned to each vehicle 20.

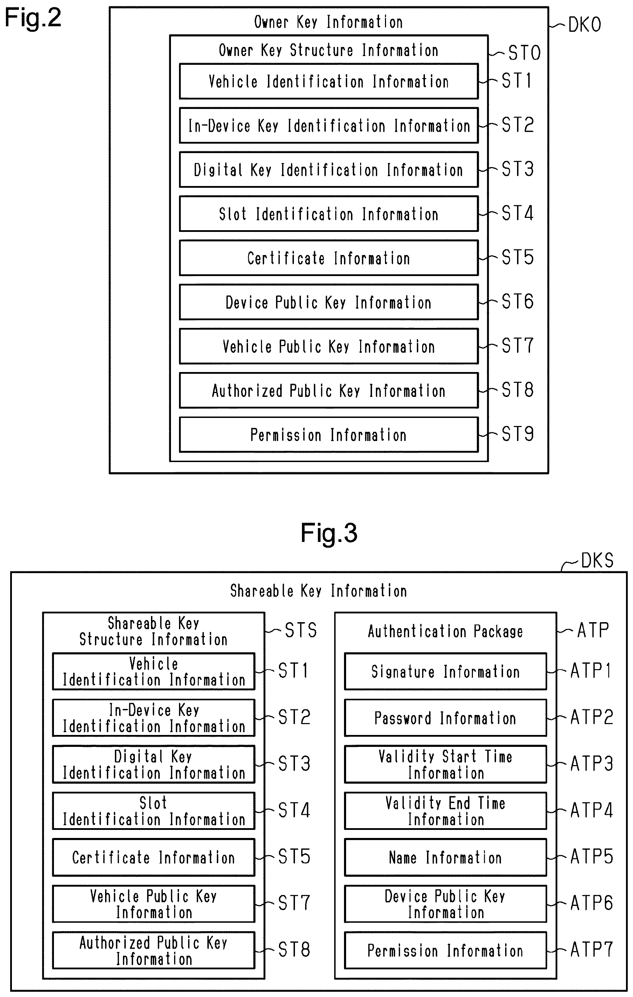

As shown in Fig. 2, the owner key information DKO includes owner key structure information STO. The owner key structure information STO includes vehicle identification information ST1, in-device key identification information ST2, digital key identification information ST3, and slot identification information ST4. The owner key structure information STO further includes certificate information ST5, device public key information ST6, vehicle public key information ST7, authorized public key information ST8, and permission information ST9.

The vehicle identification information ST1 is used to identify a vehicle 20 to which digital keys are assigned. For example, the vehicle identification information ST1 may be the ID of the vehicle 20.

The in-device key identification information ST2 is used to manage the digital keys in a device 30. The in-device key identification information ST2 is used to identify the digital keys in the application of a device 30.

The digital key identification information ST3 is used to manage the digital keys in the management server 70. The slot identification information ST4 is used to identify digital keys locally within the devices 30.

The certificate information ST5 indicates a certificate used to authenticate a digital key. The device public key information ST6 indicates a device public key PKD, which is the public key of a device 30. The device public key PKD in the owner key information DKO indicates the public key of the owner device 40. The vehicle public key information ST7 indicates a vehicle public key PKV, which is the public key of a vehicle 20. The authorized public key information ST8 indicates the vehicle public key PKV that has already been authorized. The permission information ST9 indicates a range of functions executable by the device 30 storing the permission information ST9. The range of functions executable will be described later.

As shown in Fig. 1, shareable devices 50 each store shareable key information DKS as the key information DK. The sharable key information DKS indicates a shareable key KS. The shareable key information DKS relates to the shareable key KS. The shareable key KS is a digital key. Multiple shareable keys KS are allowed to be registered to each vehicle 20. That is, multiple shareable keys KS may be associated with a single vehicle 20, thereby allowing them to be used with the same vehicle 20.

The shareable devices 50 include friend devices 51 and guest devices 52. The friend devices 51 each store friend key information DKF indicating a friend key KF as the shareable key information DKS. The friend key information DKF relates to a shareable key KS. The guest devices 52 each store guest key information DKN indicating a guest key KN as the shareable key information DKS. The guest key information DKN relates to a shareable key KS. The types of shareable keys KS include a friend key KF and a guest key KN.

The friend key KF is a shareable key KS that has been registered based on a direct registration request D21 from the owner device 40, which will be described later. The registration request D21 causes a device 30 to store the friend key information DKF, which is key information DK. The registration request D21 causes another devices 30 to store information relating to a new shareable key KS.

The guest key KN is a shareable key KS that has been registered based on a registration request D31 from the friend device 51, which will be described later. The registration request D31 causes a device 30 to store the guest key information DKN, which is new shareable key information DKS. The registration request D31 causes another device 30 to store information relating to a new shareable key KS. The guest key KN is a shareable key KS registered based on an indirect registration request from the shareable device 50, which is a device 30 different from the owner device 40.

When a digital key is registered, the digital key is enabled. When a digital key is registered, a vehicle 20 stores the authentication information AT corresponding to the key information DK, and a device 30 stores the key information DK corresponding to the authentication information AT. The authentication information AT relates to digital keys. When a digital key is registered, a vehicle 20 stores information relating to the digital key. The key information DK relates to the digital key. When a digital key is registered, a device 30 stores information relating to the digital key. When the key information DK relates to the shareable key KS, the authentication information AT corresponding to the key information DK also relates to the shareable key KS.

As shown in Fig. 3, the shareable key information DKS includes shareable key structure information STS and an authentication package ATP. The shareable key structure information STS includes vehicle identification information ST1, in-device key identification information ST2, digital key identification information ST3, and slot identification information ST4. The shareable key structure information STS further includes certificate information ST5, vehicle public key information ST7, and authorized public key information ST8. Accordingly, the shareable key structure information STS is equivalent to the owner key structure information STO without the device public key information ST6 and the permission information ST9.

The authentication package ATP includes signature information ATP1, password information ATP2, validity start time information ATP3, validity end time information ATP4, name information ATP5, device public key information ATP6, and permission information ATP7.

The signature information ATP1 indicates that the shareable device 50 is an authorized entity for sharing a digital key. In the friend device 51, for example, the signature information ATP1 indicates a signature of the owner device 40. Owner signature information indicates that the owner device 40 has signed the device public key PKD of the friend device 51, which is indicated by the device public key information ATP6. In the guest device 52, for example, the signature information ATP1 indicates a signature of the friend device 51. Friend signature information indicates that the friend device 51 has signed the device public key PKD of the guest device 52, which is indicated by the device public key information ATP6.

The password information ATP2 indicates a pairing password PAS used to establish a secure channel when each vehicle 20 and the corresponding owner device 40 are paired. The validity start time information ATP3 indicates the earliest date and time at which the shareable key KS becomes valid for use. The validity end time information ATP4 indicates the latest date and time until which the shareable key KS remains valid for use. The name information ATP5 indicates a name for identifying the shareable devices 50 storing the shareable key information DKS. For example, in response to an operation performed on the owner device 40, the name information ATP5 is set for each shareable device 50 as a name by which the shareable key KS is identifiable. The permission information ATP7 indicates a range of functions executable by the devices 30 storing the permission information ATP7.

Examples of the range of executable functions include the number of shareable keys KS that may be requested for registration and the range of functions of a vehicle 20 enabled through authentication of a digital key. For example, the number of friend keys KF that an owner device 40 is permitted to request for registration is greater than the number of guest keys KN that a friend device 51 is permitted to request for registration.

The range of functions of a vehicle 20 executable refers to the set of controllable functions, such as engine start control of the vehicle 20, power-on control of the vehicle 20, and door unlocking and locking control of the vehicle 20. For example, when the range of executable functions of a vehicle 20 include these three types of controls, the range of executable functions of the vehicle 20 is wider than when the range of executable functions of the vehicle 20 includes only the door unlocking and locking control of the vehicle 20. Specifically, the range of executable functions of a vehicle 20 executable by a friend device 51 includes the three functions, whereas the range of functions of the vehicle 20 executable by a guest device 52 include power-on control of the vehicle 20 and door unlocking and locking control of the vehicle 20.

Referring to Fig. 1, the device server 60 relays communication between the device 30 and the management server 70. Fig. 1 shows only one device server 60. However, a separate device server 60 may be provided for each type of device 30. That is, the device server 60 used for communication with a first type of device 30 may differ from the device server 60 used for communication with a second type of device 30. For example, the type may refer to the model of a device 30, and a separate device server 60 may be provided for each model of the device 30. For example, the type may refer to the communication line used by the device 30, and a separate device server 60 may be provided for each type of communication line used by the device 30.

Each of the device servers 60 relays communication between the corresponding device 30 and the management server 70. The devices 30 of different types are each configured to communicate with the management server 70 via the corresponding device server 60.

### Management Server 70

The management server 70 manages multiple digital keys. The management server 70 is configured to communicate with a vehicle 20 and multiple devices 30. The management server 70 includes an execution device 71, a storage device 72, and a communication module 73. The execution device 71 is processing circuitry including one or more processors that execute various processes according to computer programs (software). The communication module 73 communicates with the device server 60 via a wireless communication line. Further, the communication module 73 is configured to wirelessly communicate with the communication module 21 of the vehicle 20.

The storage device 72 stores a server program PS and a database DB.

The server program PS causes the execution device 71 to register digital keys to the database DB and delete digital keys from the database DB.

The database DB includes information in which each of the digital keys is associated with a corresponding vehicle 20 and a corresponding device 30 to which the digital key is registered. The database DB includes data DA that is partitioned per vehicle 20. When digital keys are registered, the management server 70 stores, as the data DA, information indicating the devices 30 that store key information DK indicating the digital keys. The management server 70 manages the digital keys by storing, in the database DB, information relating to the digital keys as the data DA.

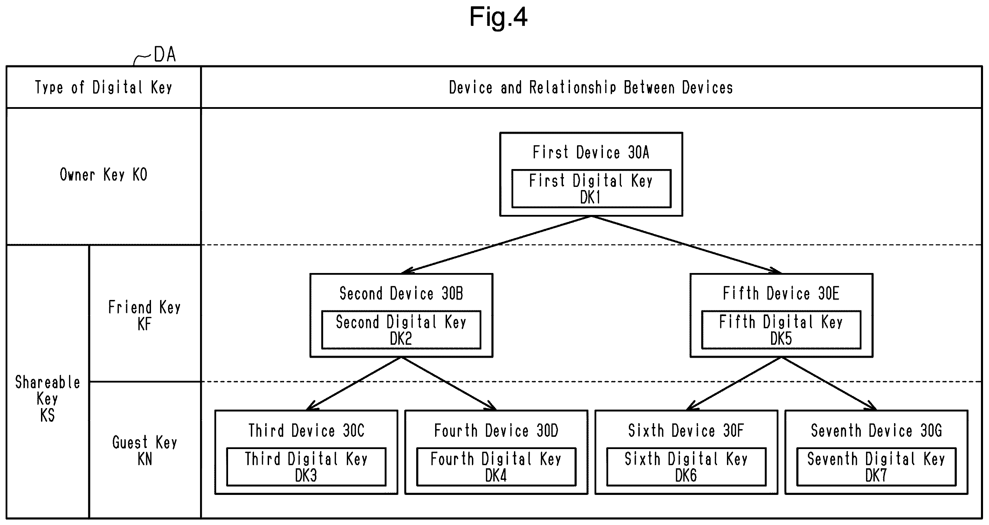

As shown in Fig. 4, the data DA of one vehicle 20 includes information relating to the types of digital keys registered to the vehicle 20, the registered devices 30, and the relationship between the registered devices 30. The digital keys are categorized into multiple hierarchical levels according to their respective types. From highest to lowest in the hierarchy, the digital keys are ordered as an owner key KO, a friend key KF, and a guest key KN. Digital keys with higher hierarchy levels are assigned greater permission levels.

Permission includes, for example, the number of shareable keys KS that may be requested for registration and the range of control over a vehicle 20 enabled through authentication of a digital key. For example, digital keys at higher hierarchical levels are permitted to request registration of a greater number of shareable keys KS. Specifically, for example, the number of friend keys KF that an owner device 40 is permitted to request for registration is greater than the number of guest keys KN that a friend device 51 is permitted to request for registration.

Further, for example, the higher the hierarchy level of a digital key, the wider the range of control of a vehicle 20. The range of control of a vehicle 20 refers to the set of controllable functions, such as engine start control of the vehicle 20, power-on control of the vehicle 20, and door unlocking and locking control of the vehicle 20. For example, when the range of control of a vehicle 20 includes all three of the above functions, the range is broader than when it includes only door unlocking and locking control of the vehicle 20. Specifically, the control scope the range of control of a vehicle 20 enabled by a friend key KF includes all three functions described above, whereas the range of control of the vehicle 20 enabled by a guest key KN is limited to only the door unlocking and locking control of the vehicle 20.

A state in which a digital key is registered to each of seven devices 30 with respect to a single vehicle 20 will now be described. The seven devices 30 will be referred to as first to seventh devices 30A to 30G. Further, the digital keys respectively registered to the first to seventh devices 30A to 30G will be referred to as first to seventh digital keys DK1 to DK7.

The device 30 to which an owner key KO is registered as a digital key is the first device 30A. In other words, the first device 30A is the owner device 40. That is, the first digital key DK1 is an owner key KO.

The devices 30 to which shareable keys KS are registered as digital keys are the second device 30B, the third device 30C, the fourth device 30D, the fifth device 30E, the sixth device 30F, and the seventh device 30G. In other words, the second device 30B, the third device 30C, the fourth device 30D, the fifth device 30E, the sixth device 30F, and the seventh device 30G are shareable devices 50. That is, the second to seventh digital keys DK2 to DK7 are all shareable keys KS.

Specifically, the devices 30 to which a friend key KF is registered as a shareable key KS are the second device 30B and the fifth device 30E. In other words, the second device 30B and the fifth device 30E are friend devices 51. The devices 30 to which a guest key KN is registered as a shareable key KS are the third device 30C, the fourth device 30D, the sixth device 30F, and the seventh device 30G. In other words, the third device 30C, the fourth device 30D, the sixth device 30F, and the seventh device 30G are guest devices 52.

The relationship between the registered devices 30 included in the data DA will now be described. The relationship between the second device 30B and the first device 30A is such that a friend key KF has been registered to the second device 30B in response to a registration request from the first device 30A. In other words, the second digital key DK2 is registered based on the first digital key DK1.

The relationship between the fifth device 30E and the first device 30A is such that a friend key KF has been registered to the fifth device 30E in response to a registration request from the first device 30A. In other words, the fifth digital key DK5 is registered based on the first digital key DK1.

The relationship between the third device 30C and the second device 30B is such that a guest key KN has been registered to the third device 30C in response to a registration request from the second device 30B. In other words, the third digital key DK3 is registered based on the second digital key DK2.

The relationship between the fourth device 30D and the second device 30B is such that a guest key KN has been registered to the fourth device 30D in response to a registration request from the second device 30B. In other words, the fourth digital key DK4 is registered based on the second digital key DK2.

The relationship between the sixth device 30F and the fifth device 30E is such that a guest key KN has been registered to the sixth device 30F in response to a registration request from the fifth device 30E. In other words, the sixth digital key DK6 is registered based on the fifth digital key DK5.

The relationship between the seventh device 30G and the fifth device 30E is such that a guest key KN has been registered to the seventh device 30G in response to a registration request from the fifth device 30E. In other words, the seventh digital key DK7 is registered based on the fifth digital key DK5.

As described above, the data DA includes information relating to the devices 30 to which digital keys have been registered. In the data DA, each registered device 30 is associated with information indicating the device 30 that made the request that resulted in registration of that registered device 30. The data DA also includes information indicating the digital key on which the registration of each digital key is based.

### Registration of Digital Key

A series of processes executed by the management system 10 to register a digital key will now be described. The registration of digital keys includes the registration of an owner key KO, the registration of a friend key KF, and the registration of a guest key KN. The description hereafter will illustrate an overall process that shifts a state in which no digital key is registered to a state in which at least one digital key is registered. In the following description, processes executed by the execution device 27 will be described as processes executed by the vehicle 20, processes executed by the execution device 36 will be described as processes executed by the device 30, and processes executed by the execution device 71 will be described as processes executed by the management server 70.

### Registration of Owner Key

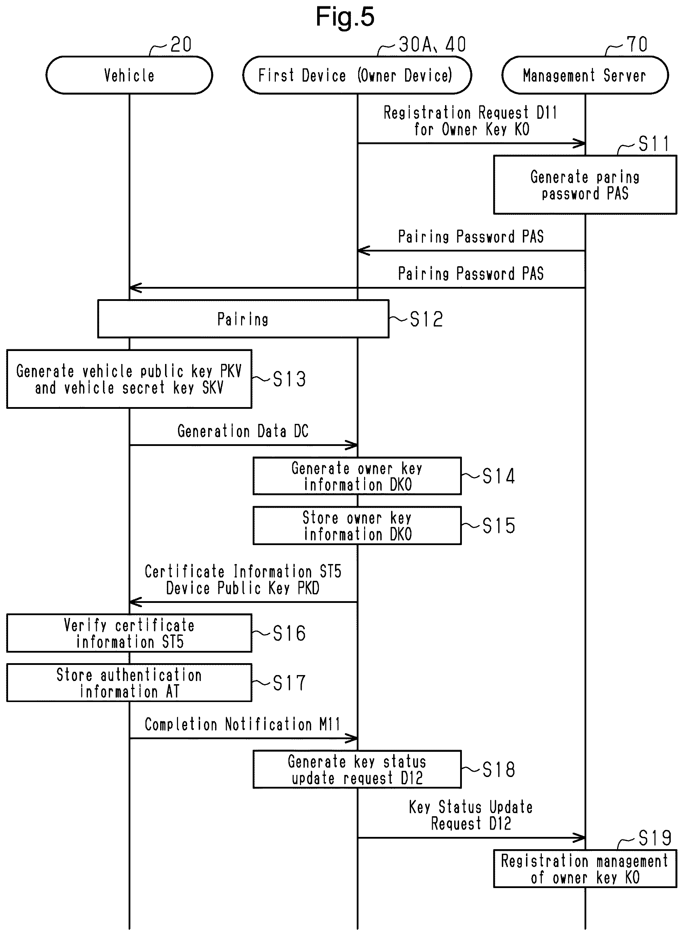

As shown in Fig. 5, the management system 10 executes a series of processes in order to register an owner key KO for a vehicle 20. Among the devices 30 that do not store the key information DK indicating the owner key KO, the device 30 that is designated as an owner device 40 is referred to as the first device 30A.

In the management system 10, the owner key information DKO, which is key information DK indicating the owner key KO for the vehicle 20, is stored in the first device 30A by registering the owner key KO. In the management system 10, the authentication information AT for authenticating the owner key KO is stored in the vehicle 20. When the owner key KO is authenticated by the vehicle 20 and the owner key KO is registered to the management server 70, the control of the vehicle 20 using the owner key KO is enabled. The present example assumes that appropriate applications have been installed in the first device 30A prior to the registration of the owner key KO.

Upon acquiring a registration request D11 for the owner key KO from the first device 30A, the management server 70 executes the process of step S11. In step S11, the management server 70 generates a pairing password PAS. The management server 70 then transmits information indicating the pairing password PAS to the vehicle 20 and the first device 30A.

After receiving the pairing password PAS, the vehicle 20 is set to the pairing mode via the HMI 22. Then, the vehicle 20 proceeds to step S12 while remaining in a state in which it can receive the password from the first device 30A.

In step S12, the vehicle 20 performs pairing with the first device 30A. When the pairing is performed, the vehicle 20 establishes a secure channel for data transmission with the first device 30A. The pairing is performed using the pairing password PAS transmitted from the management server 70 to the vehicle 20 and the first device 30A. Upon completion of the pairing, the vehicle 20 proceeds to step S13.

In step S13, the vehicle 20 generates the vehicle public key PKV, which is the public key of the vehicle 20, and the vehicle secret key SKV, which is the secret key of the vehicle 20. Then, the vehicle 20 transmits generation data DC for generating the owner key KO to the first device 30A through the secure channel. The generation data DC includes the vehicle identification information ST1 and the vehicle public key information ST7, which indicates the vehicle public key PKV. Upon receiving the generation data DC, the first device 30A proceeds to step S14.

In step S14, the first device 30A generates the owner key information DKO indicating the owner key KO. Then, the first device 30A proceeds to step S15.

In step S15, the first device 30A stores the owner key information DKO. As a result, the first device 30A is configured as the owner device 40. Subsequently, the first device 30A transmits the certificate information ST5, which relates to the owner key KO, and the device public key information ST6, which indicates the device public key PKD, to the vehicle 20.

Upon receiving the certificate information ST5 and the device public key information ST6, the vehicle 20 executes the process of step S16. In step S16, the vehicle 20 verifies the certificate information ST5. Upon completion of verification of the certificate information ST5, the vehicle 20 proceeds to step S17.

In step S17, the vehicle 20 stores the device public key information ST6 indicating the device public key PKD in the storage device 28 as the authentication information AT. Subsequently, the vehicle 20 transmits a completion notification M11 to the first device 30A, indicating that the storage of the authentication information AT has been completed.

Upon receiving the completion notification M11, the first device 30A executes the process of step S18. In step S18, the first device 30A generates a key status update request D12 for the owner key KO. The key status update request D12 is a signal that requests the management server 70 to update the database DB. The first device 30A transmits the key status update request D12 for the owner key KO via the device server 60 to the management server 70.

Upon receiving the key status update request D12, the management server 70 executes the process of step S19. In step S19, the management server 70 performs registration management of the owner key KO. Specifically, the management server 70 stores, as the data DA of the vehicle 20 in the database DB, information indicating that the device 30 to which the owner key KO is registered is the first device 30A. Thus, the management system 10 terminates the series of processes for registering the owner key KO of the vehicle 20 in the first device 30A.

### Registration of Friend Key

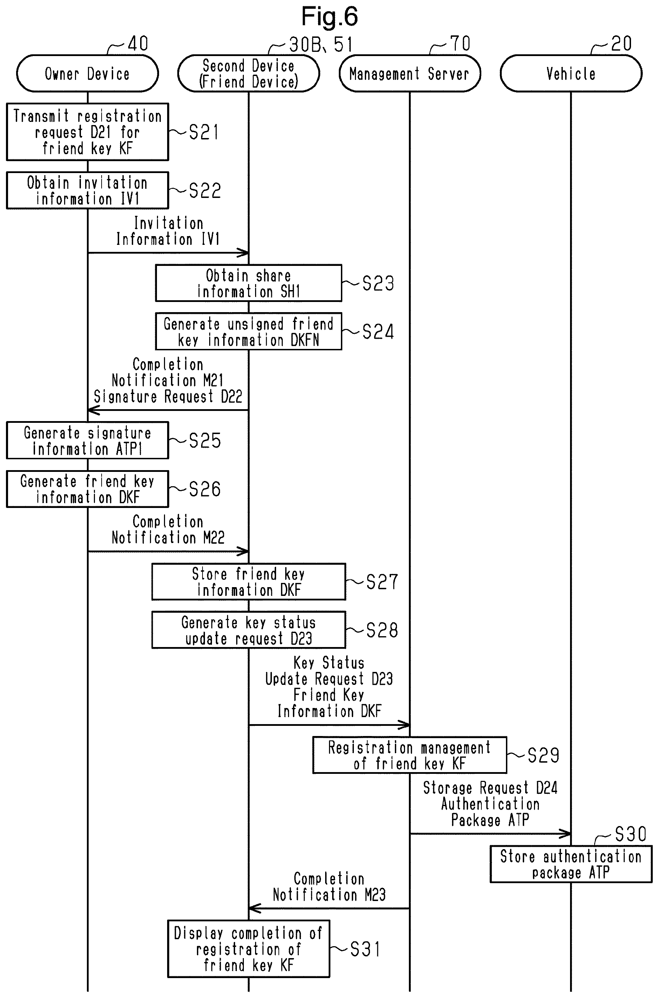

As shown in Fig. 6, the management system 10 executes a series of registration processes to register a friend key KF. Among the devices 30 that do not store the friend key information DKF, the device 30 designated as the friend device 51 through the series of processes is defined as the second device 30B.

When an operation to request the registration of the friend key KF is performed in the owner device 40, the owner device 40 first executes the process of step S21. In step S21, the owner device 40 transmits a registration request D21 for the friend key KF to a relay server (not shown). Then, the owner device 40 proceeds to step S22.

In step S22, the owner device 40 acquires invitation information IV1 for sharing a digital key from the relay server. The invitation information IV1 includes, for example, a uniform resource locator (URL) link. The URL link contains share information SH1 necessary to share the digital key. Then, the owner device 40 transmits the invitation information IV1 to the second device 30B.

Upon receiving the invitation information IV1, the second device 30B executes the process of step S23. In step S23, the second device 30B acquires the share information SH1 based on the invitation information IV1. Specifically, the second device 30B downloads the share information SH1 from the URL link.

The share information SH1 includes, for example, the shareable key structure information STS, the password information ATP2, the validity start time information ATP3, the validity end time information ATP4, and the name information ATP5. The validity start time information ATP3, the validity end time information ATP4, and the name information ATP5 are configured by the owner device 40. Then, the second device 30B proceeds to step S24.

In step S24, the second device 30B generates unsigned friend key information DKFN by using the share information SH1. The unsigned friend key information DKFN is friend key information DKF that does not have the signature information ATP1. Specifically, the second device 30B generates various types of information contained in the acquired share information SH1, as various types of information relating to the unsigned friend key information DKFN. Then, the second device 30B transmits a completion notification M21 to the owner device 40, indicating that the upload of the generated unsigned friend key information DKFN to the URL link has been completed. The second device 30B also transmits a signature request D22 to the owner device 40.

Subsequently, the owner device 40 receives the completion notification M21 and the signature request D22 from the second device 30B. Upon receiving the completion notification M21, the owner device 40 obtains the unsigned friend key information DKFN. Upon receiving the signature request D22, the owner device 40 executes the process of step S25.

In step S25, the owner device 40 generates the signature information ATP1. Specifically, the owner device 40 causes the HMI 32 to present the unsigned friend key information DKFN that has been obtained, and accepts an operation indicating that the user of the owner device 40 has agreed to the registration of the friend key KF. Upon receiving the operation, the owner device 40 generates the signature information ATP1 based on the operation. Then, the owner device 40 proceeds to step S26.

In step S26, the owner device 40 adds the signature information ATP1 to the unsigned friend key information DKFN, thereby generating the friend key information DKF. The owner device 40 uploads the generated friend key information DKF through the URL link included in the invitation information IV1. Then, the owner device 40 transmits a completion notification M22 to the second device 30B, indicating that the upload of the generated friend key information DKF to the URL link has been completed.

Upon acquiring the completion notification M22, the second device 30B executes the process of step S27. In step S27, the second device 30B downloads and stores the friend key information DKF. As a result, the second device 30B is designated as the friend device 51. Subsequently, the second device 30B proceeds to step S28.

In step S28, the second device 30B generates a key status update request D23 for the friend key KF. The second device 30B transmits the friend key information DKF and the key status update request D23 for the friend key KF to the management server 70.

Upon receiving the key status update request D23 for the friend key KF, the management server 70 executes the process of step S29. In step S29, the management server 70 performs registration management of the friend key KF.

Specifically, the management server 70 checks whether the friend key KF, which is the target of the key status update request D23, is not listed in a revocation list. The revocation list indicates shareable keys KS, including friend keys KF and guest keys KN, for which deletion requests have already been received. When the friend key KF is listed in the revocation list, the management server 70 transmits a notification to the second device 30B, indicating that it cannot respond to the key status update request D23.

When the friend key KF that has received the key status update request D23 is not listed in the revocation list, the management server 70 registers information relating to the friend key KF that has received the key status update request D23 to the database DB. The management server 70 stores, as the data DA in the database DB, the friend key information DKF of the friend key KF that has received the key status update request D23. The management server 70 stores, as the data DA in the database DB, information indicating that the device 30 registered as the friend device 51 is the second device 30B. The management server 70 stores the information indicating the relationship between the second device 30B and the owner device 40 with reference to the obtained friend key information DKF. Specifically, the management server 70 stores information indicating that the second device 30B is the device 30 having the friend key KF registered in response to the registration request D21 from the owner device 40.

Subsequently, the management server 70 transmits, to the vehicle 20, the authentication package ATP, which is part of the friend key information DKF, along with a storage request D24, which requests the storage of the authentication package ATP. That is, the management server 70 transmits the device public key information ST6, which indicates the device public key PKD of the friend device 51, to the vehicle 20. The management server 70 notifies the vehicle 20 that the device public key PKD has been signed by the owner device 40.

Upon receiving the storage request D24 and the authentication package ATP from the management server 70, the vehicle 20 executes the process of step S30. In step S30, the vehicle 20 stores the received authentication package ATP as the authentication information AT for authenticating the friend key KF.

After completing the registration management, the management server 70 transmits a completion notification M23 of the key status update to the second device 30B.

Upon receiving the completion notification M23 of the key status update, the second device 30B executes the process of step S31. In the process of step S31, the second device 30B presents the HMI 32 with information indicating that registration of the friend key KF has been completed. For example, the second device 30B displays, on the HMI 32, an image indicating that the registration of the friend key KF has been completed. As a result, the management system 10 terminates the series of processes for registering the friend key KF.

### Registration of Guest Key

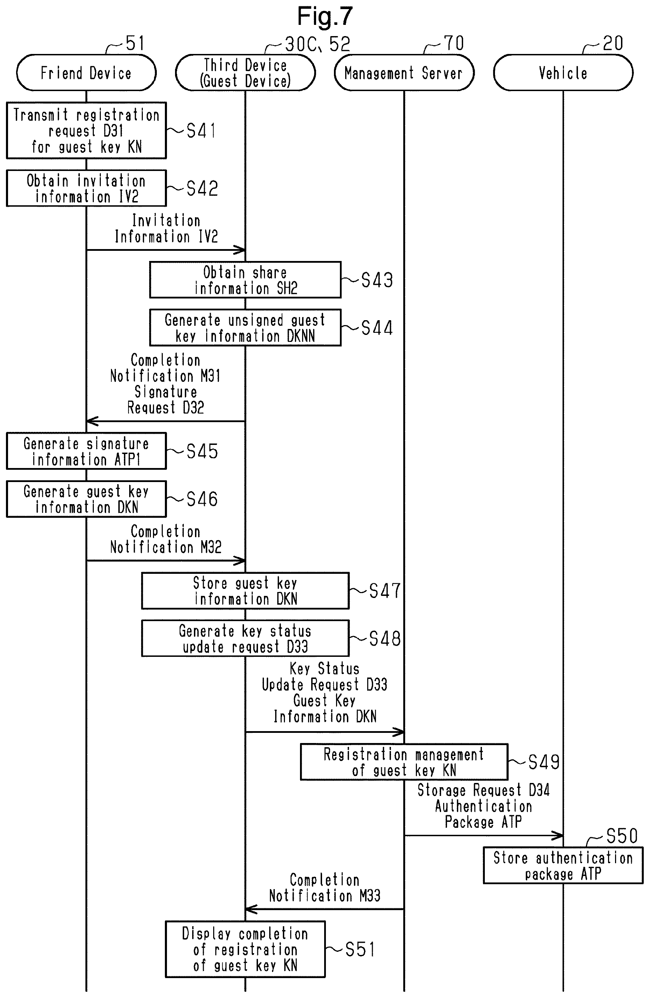

As shown in Fig. 7, the management system 10 executes a series of registration processes in order to register a guest key KN. Among the devices 30 that do not store the guest key information DKN, the third device 30C is designated as a guest device 52 through the series of processes.

Upon receiving an operation to request the registration of the guest key KN, the friend device 51 first executes the process of step S41. In step S41, the friend device 51 transmits a registration request D31 for the guest key KN to the relay server (not shown). Then, the friend device 51 proceeds to step S42.

In step S42, the friend device 51 obtains invitation information IV2 for sharing a digital key from the relay server. The invitation information IV2 includes, for example, a URL link. The URL link contains share information SH2 necessary to share the digital key. The friend device 51 transmits the invitation information IV2 to the third device 30C.

Upon receiving the invitation information IV2, the third device 30C executes the process of step S43. In step S43, the third device 30C obtains the share information SH2 based on the invitation information IV2. Specifically, the second device 30B downloads the share information SH2 through the URL link.

The share information SH2 includes, for example, the shareable key structure information STS, the password information ATP2, the validity start time information ATP3, the validity end time information ATP4, and the name information ATP5. The validity start time information ATP3, the validity end time information ATP4, and the name information ATP5 are configured by the friend device 51. Then, the third device 30C proceeds to step S44.

In step S44, the third device 30C generates unsigned guest key information DKNN using the share information SH2. The unsigned guest key information DKNN is guest key information DKN that does not have the signature information ATP1. Specifically, the third device 30C generates various types of information included in the obtained share information SH2, as various types of information relating to the unsigned guest key information DKNN. Then, the third device 30C transmits a completion notification M31, indicating that the generated unsigned guest key information DKNN has been uploaded through the URL link, and a signature request D32, which requests a signature.

Subsequently, the friend device 51 receives the completion notification M31 and the signature request D32 from the third device 30C. Upon receiving the completion notification M31, the friend device 51 obtains the unsigned guest key information DKNN. Upon receiving the signature request D32, the friend device 51 performs the process of step S45 in response to an operation performed on the friend device 51.

In step S45, the friend device 51 generates the signature information ATP1. Specifically, the friend device 51 causes the HMI 32 to present the unsigned guest key information DKNN that has been obtained, and accepts an operation indicating that the user of the friend device 51 has agreed to the registration of the guest key KN. Upon receiving the operation, the friend device 51 obtains the signature based on the operation. Then, the friend device 51 proceeds to step S46.

In step S46, the friend device 51 adds the signature information ATP1 to the unsigned guest key information DKNN, thereby generating the guest key information DKN. The friend device 51 uploads the generated guest key information DKN through the URL link included in the invitation information IV2. The friend device 51 transmits the completion notification M32 to the third device 30C, indicating that the upload of the generated guest key information DKN to the URL link has been completed.

Upon receiving the completion notification M32, the third device 30C executes the process of step S47. In step S47, the third device 30C downloads and stores the guest key information DKN. As a result, the third device 30C is configured as the guest device 52. Subsequently, the third device 30C proceeds to step S48.

In step S48, the third device 30C generates a key status update request D33 for the guest key KN. The third device 30C transmits the guest key information DKN and the key status update request D33 for the guest key KN to the management server 70.

Upon receiving the key status update request D33 for the guest key KN, the management server 70 executes the process of step S49. In step S49, the management server 70 performs registration management of the guest key KN.

Specifically, the management server 70 checks whether the guest key KN, which is the target of the key status update request D33, is not listed in the revocation list. When the guest key KN is listed in the revocation list, the management server 70 transmits a notification to the third device 30C, indicating that it cannot respond to the key status update request D33.

When the guest key KN is not listed in the revocation list, the management server 70 registers the information relating to the guest key KN, which is the target of the key status update request D33, to the database DB. The management server 70 stores, as the data DA in the database DB, the guest key information DNK of the guest key KN that has received the key status update request D33. The management server 70 stores, as the data DA in the database DB, information indicating that the device 30 registered as the guest device 52 is the third device 30C. The management server 70 stores the relationship between the third device 30C and the friend device 51 with reference to the obtained guest key information DKN. Specifically, the management server 70 stores information indicating that the third device 30C is the device 30 having the guest key KN registered in response to the registration request D31 from the friend device 51.

Then, the management server 70 transmits the authentication package ATP included in the guest key information DKN, and a storage request D34, which requests storage of the authentication package ATP, to the corresponding vehicle 20. That is, the management server 70 transmits the device public key information ST6, which indicates the device public key PKD of the guest device 52, to the vehicle 20. The management server 70 notifies the vehicle 20 that the device public key PKD has been signed by the friend device 51.

Then, upon receiving the authentication package ATP and the storage request D34, the vehicle 20 executes the process of step S50. In step S50, the vehicle 20 stores the received authentication package ATP. That is, the vehicle 20 stores the authentication package ATP as the authentication information AT for authenticating the guest key KN.

After completing the registration management, the management server 70 transmits a completion notification M33 of the key status update to the second device 30B.

Upon receiving the completion notification M33 of the key status update, the second device 30B executes the process of step S51. In the process of step S51, the third device 30C presents the HMI 32 with information indicating that registration of the guest key KN has been completed. For example, the third device 30C displays, on the HMI 32, an image indicating that the registration of the guest key KN has been completed. As a result, the management system 10 terminates the series of processes for registering the guest key KN.

### Change to Range of Functions of Vehicle 20

The authentication information AT stored in the storage device 28 of a vehicle 20 stores a range of functions of the vehicle 20 executable by a digital key. That is, the storage device 28 of a vehicle 20 stores the range of functions of the vehicle 20 executable by a digital key.

The range of functions of a vehicle 20 includes functions relating to driving the vehicle 20 and functions that are not relating to driving the vehicle 20. Examples of the functions relating to driving the vehicle 20 include power-on control of the vehicle 20, engine start control, and departure control of the vehicle 20. Examples of the functions that are not relating to driving the vehicle 20 include door unlocking control and locking control of the vehicle 20 and unlocking control and locking control of only the luggage compartment of the vehicle 20.

For example, when a rental operator or a sharing operator owns a vehicle 20, a usage period UT during which the user of a digital key uses the vehicle 20 may be defined. The vehicle 20 changes the range of functions of the vehicle 20 executable by the digital key during periods other than the usage period UT to be narrower than the range of functions of the vehicle 20 executable by the digital key during the usage period.

The storage device 28 stores a usage start time UST, at which the usage period UT starts, and stores a usage end time UET, at which the usage period UT ends.

The execution device 27 determines that the usage period UT has ended when the usage end time UET is reached, and determines that the usage period UT has started when the usage start time UST is reached. In the following description, processes executed by the execution device 27 are described as processes executed by the vehicle 20.

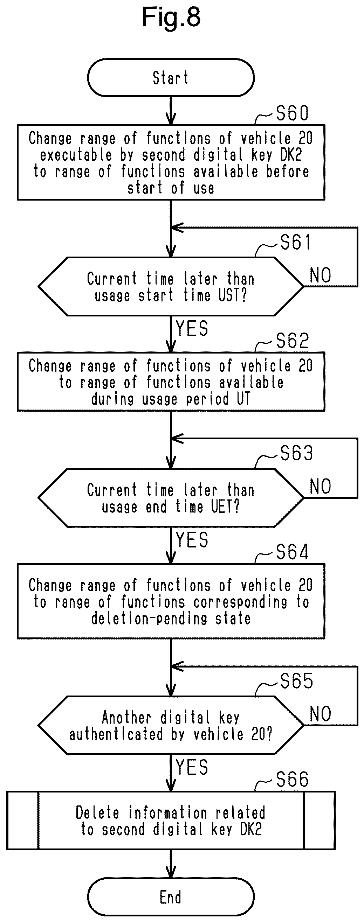

When authentication is performed with short-range wireless communication between a vehicle 20 and a device 30 that stores the information relating to the second digital key DK2 before the use of the vehicle 20 is started, the vehicle 20 executes the process of step S60 shown in Fig. 8.

As shown in Fig. 8, in step S60, the vehicle 20 changes the range of functions of the vehicle 20 executable by the second digital key DK2 to the range of functions available before the start of use. For example, the vehicle 20 changes the range of functions of the vehicle 20 so that only functions that are not relating to driving the vehicle 20 are usable, among the functions relating to driving the vehicle 20 and the functions that are not relating to driving the vehicle 20. Then, the vehicle 20 proceeds to step S61.

In step S61, the vehicle 20 determines whether the current time is later than the usage start time UST. When the current time is later than the usage start time UST (step S61: YES), the vehicle 20 proceeds to step S62. When the current time is later than the usage start time UST (step S61: NO), the vehicle 20 repeatedly executes the process of step S61.

In step S62, the vehicle 20 changes the range of functions of the vehicle 20 to the range of functions available during the usage period UT. For example, the vehicle 20 changes the range of functions of the vehicle 20 so that both the functions relating to driving the vehicle 20 and the functions that are not relating to driving the vehicle 20 are usable. Then, the vehicle 20 proceeds to step S63.

In step S63, the vehicle 20 determines whether the current time is later than the usage end time UET. When the current time is later than the usage end time UET (step S63: YES), the vehicle 20 proceeds to step S64. When the current time is earlier than the usage end time UET (step S63: NO), the vehicle 20 repeatedly executes the process of step S63.

In step S64, the vehicle 20 changes the range of functions to the range of functions corresponding to a deletion-pending state. For example, the vehicle 20 changes the range of functions of the vehicle 20 so that only functions that are not relating to driving the vehicle 20 are usable, among the functions relating to driving the vehicle 20 and the functions that are not relating to driving the vehicle 20. Then, the vehicle 20 proceeds to step S65.

In the deletion-pending state, when a predetermined condition is satisfied, the second digital key DK2 for which the usage period UT has ended is deleted. Examples of the predetermined condition is that another digital key is authenticated by the vehicle 20.

In step S65, the vehicle 20 determines whether another digital key has been authenticated to the vehicle 20. For example, when authentication is performed between the vehicle 20 and the fifth device 30E that stores the information relating to the fifth digital key DK5 (step S65: YES), the vehicle 20 proceeds to step S66. When another digital key is not authenticated by the vehicle 20 (step S65: NO), the vehicle 20 repeatedly executes the process of step S65.

In step S66, the vehicle 20 executes a process that deletes the information relating to the second digital key DK2 corresponding to the deletion-pending state. As a result, the user of the second device 30B that stores the information relating to the second digital key DK2 is prevented from using the functions of the vehicle 20. Then, the vehicle 20 terminates the series of processes.

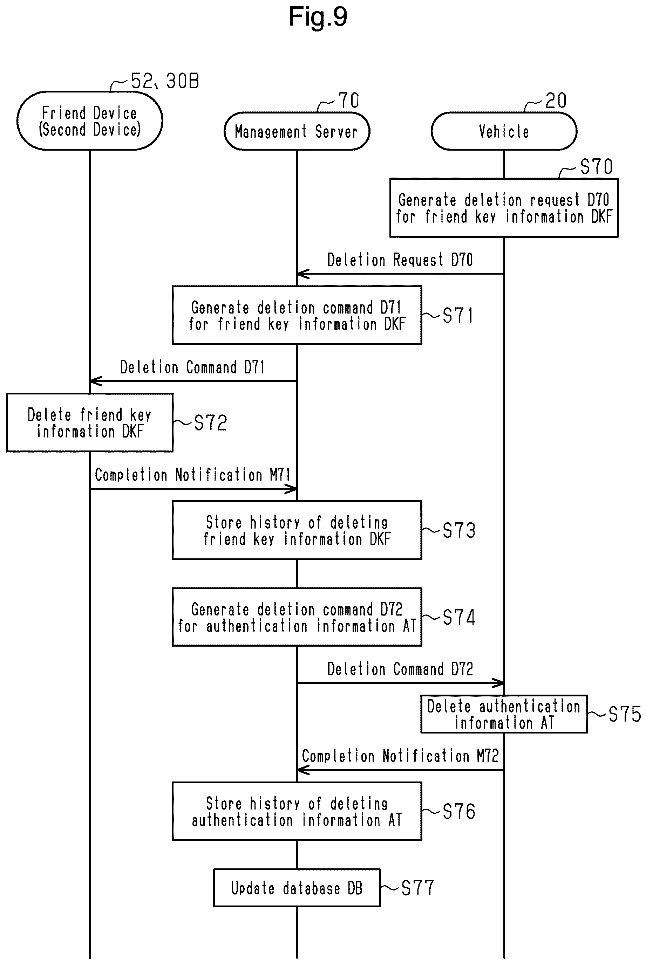

The process that deletes the information relating to the second digital key DK2 shown in step S66 includes a series of processes from step S70 to step S77 shown in Fig. 9.

As shown in Fig. 9, after starting the process that deletes the information relating to the second digital key DK2, the vehicle 20 executes the process of step S70. In step S70, the vehicle 20 generates a deletion request D70 for deleting the friend key information DKF indicating the second digital key DK2. Then, the vehicle 20 transmits the generated deletion request D70 to the management server 70.

Upon receiving the deletion request D70, the management server 70 executes the process of step S71. In step S71, the management server 70 generates a deletion command D71. The deletion command D71 is issued to delete the friend key information DKF stored in the second device 30B. The management server 70 transmits the deletion command D71 to the second device 30B.

Upon receiving the deletion command D71, the second device 30B executes the process of step S72. In step S72, the second device 30B deletes the friend key information DKF in accordance with the deletion command D71. Then, the second device 30B transmits the completion notification M71, which indicates that the deletion according to the deletion command D71 has been completed, to the management server 70.

Upon receiving the completion notification M71, the management server 70 executes the process of step S73. In step S73, the management server 70 stores a history of deleting the friend key information DKF in the second device 30B. Then, the management server 70 executes the process of step S74.

In step S74, the management server 70 generates a deletion command D72 for the authentication information AT. The deletion command D72 for the authentication information AT is issued to delete the authentication information AT for authenticating the second digital key DK2, which is the target of the deletion request D70. The management server 70 transmits the deletion command D72 to the vehicle 20.

Upon receiving the deletion command D72, the vehicle 20 executes the process of step S75. In step S75, in accordance with the deletion command D72, the vehicle 20 deletes the authentication information AT for authenticating the second digital key DK2, which is the target of the deletion request D70. That is, the vehicle 20 deletes the authentication package ATP of the second digital key DK2 stored in the database DB. Then, the vehicle 20 transmits the completion notification M72, which indicates that deletion of the authentication information AT in accordance with the deletion command D72 has been completed, to the management server 70.

Upon receiving the completion notification M72, the management server 70 executes the process of step S76. In step S76, the management server 70 stores a history of deleting the authentication information AT for authenticating the second digital key DK2 to be deleted in the series of deletion processes in the current cycle for the vehicle 20. Then, the management server 70 proceeds to step S77.

In step S77, the management server 70 updates the database DB. Specifically, the management server 70 deletes, from the data DA of the vehicle 20 in the database DB, the information relating to the second device 30B having the second digital key DK2 to be deleted in the series of processes in the current cycle.

### Operation of the First Embodiment

When the range of functions of a vehicle 20 executable by the second digital key DK2 is narrowed, the user of the second device 30B that stores the information relating to the second digital key DK2 is restricted from using the vehicle 20.

### Advantages of the First Embodiment

(1-1) Each vehicle 20 is configured to restrict the use of the vehicle 20 by the user of the second digital key DK2 in periods other than the usage period UT, as compared to during the usage period UT.

(1-2) The range of the functions of a vehicle 20 includes functions relating to driving the vehicle 20 and functions that are not relating to driving the vehicle 20. The vehicle 20 changes the range of functions of the vehicle 20 so that the user of the second digital key DK2 is prevented from using the functions relating to driving the vehicle 20 in periods other than the usage period UT. Even in periods other than the usage period UT, users have a need to use functions that are not relating to driving the vehicle 20. By contrast, in periods other than the usage period UT, there is a need to restrict the use of functions relating to driving the vehicle 20. The vehicle 20 changes the range of functions of the vehicle 20 so that the functions relating to driving the vehicle 20 cannot be used in periods other than the usage period UT, among the functions of the vehicle 20. As a result, the vehicle 20 restricts driving the vehicle 20 by the user of the second digital key DK2 in periods other than the usage period UT, and allows the user of the second digital key DK2 to use functions that are not relating to driving the vehicle 20 even in periods other than the usage period UT.

(1-3) Each vehicle 20 stores the usage start time UST, at which the usage period UT starts. When the usage start time UST is reached, it is determined that the usage period UT has started. This allows the vehicle 20 to determine that the usage period UT has started without the user's operation on the second digital key DK2.

(1-4) Each vehicle 20 stores the usage end time UET, at which the usage period UT ends. When the usage end time UET is reached, it is determined that the usage period UT has ended. This allows the vehicle 20 to determine that the usage period UT has ended without the user's operation on the second digital key DK2.

### Second Embodiment

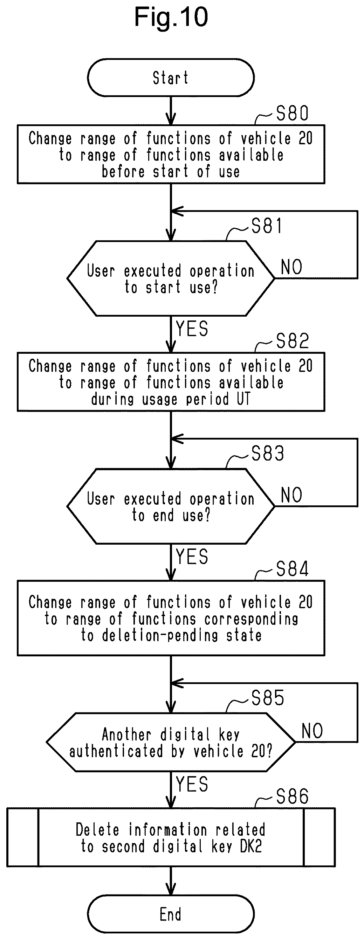

A vehicle 20 according to a second embodiment will now be described with reference to Fig. 10. The following describes the second embodiment, focusing on differences from the first embodiment. In the second embodiment, the vehicle 20 includes an interface operable by the user of the vehicle 20. Specifically, the vehicle 20 includes the HMI 22 as the interface. The vehicle 20 determines that the usage period UT has started when an operation to start use of the vehicle 20 is performed via the interface. The vehicle 20 determines that the usage period UT has ended when an operation to end use of the vehicle 20 is performed via the interface. The following description focuses on differences from the first embodiment, and identical portions are briefly described or omitted.

When authentication is performed with short-range wireless communication between a vehicle 20 and a device 30 that stores information relating to the second digital key DK2 before the use of the vehicle 20 is started, the vehicle 20 executes the process of step S80 shown in Fig. 10.

In step S80, the vehicle 20 changes the range of functions of the vehicle 20 executable by the second digital key DK2 to the range of functions available before the start of use. Step S80 is identical to step S60 shown in Fig. 8, and thus will not be described in detail. Then, the vehicle 20 proceeds to step S81.

In step S81, the vehicle 20 determines whether an operation to start use of the vehicle 20 has been performed via the interface. Specifically, the vehicle 20 determines whether an operation to start use of the vehicle 20 has been performed via the HMI 22. When an operation to start use of the vehicle 20 has been performed (step S81: YES), the vehicle 20 proceeds to step S82. When an operation to start use of the vehicle 20 has not been performed (step S81: NO), the vehicle 20 repeatedly executes the process of step S81.

In step S82, the vehicle 20 changes the range of functions of the vehicle 20 to the range of functions available during the usage period UT. Step S82 is identical to step S62 shown in Fig. 8, and thus will not be described in detail. Then, the vehicle 20 proceeds to step S83.

In step S83, the vehicle 20 determines whether an operation to end use of the vehicle 20 has been performed via the interface. Specifically, the vehicle 20 determines whether an operation to end use of the vehicle 20 has been performed via the HMI 22. When an operation to end use of the vehicle 20 has been performed (step S83: YES), the vehicle 20 proceeds to step S84. When an operation to end use of the vehicle 20 has not been performed (step S83: NO), the vehicle 20 repeatedly executes the process of step S83.

In step S84, the vehicle 20 changes the range of functions of the vehicle 20 to the range of functions corresponding to the deletion-pending state. Step S84 is identical to step S64 shown in Fig. 8, and thus will not be described in detail. Then, the vehicle 20 proceeds to step S85.

In step S85, the vehicle 20 determines whether another digital key has been authenticated by the vehicle 20. For example, when authentication is performed between the vehicle 20 and the fifth device 30E that stores information relating to the fifth digital key DK5 (step S85: YES), the vehicle 20 proceeds to step S86. When another digital key is not authenticated by the vehicle 20 (step S85: NO), the vehicle 20 repeatedly executes the process of step S85.

In step S86, the vehicle 20 executes a process that deletes the information relating to the second digital key DK2 corresponding to the deletion-pending state. Step S86 is identical to step S66 shown in Fig. 8, and thus will not be described in detail. Then, the vehicle 20 terminates the series of processes.

### Operation of the Second Embodiment

Each vehicle 20 includes the corresponding HMI 22 as the interface operable by the user. The vehicle 20 determines that the usage period UT has started when an operation to start use of the vehicle 20 is performed via the HMI 22. The vehicle 20 determines that the usage period UT has ended when an operation to end use of the vehicle 20 is performed via the HMI 22.

### Advantages of the Second Embodiment

The second embodiment provides the following advantages in addition to advantages (1-1) and (1-2) of the first embodiment.

(2-1) The user of a vehicle 20 is allowed to start the usage period UT.

(2-2) The user of a vehicle 20 is allowed to end the usage period UT.

### Third Embodiment

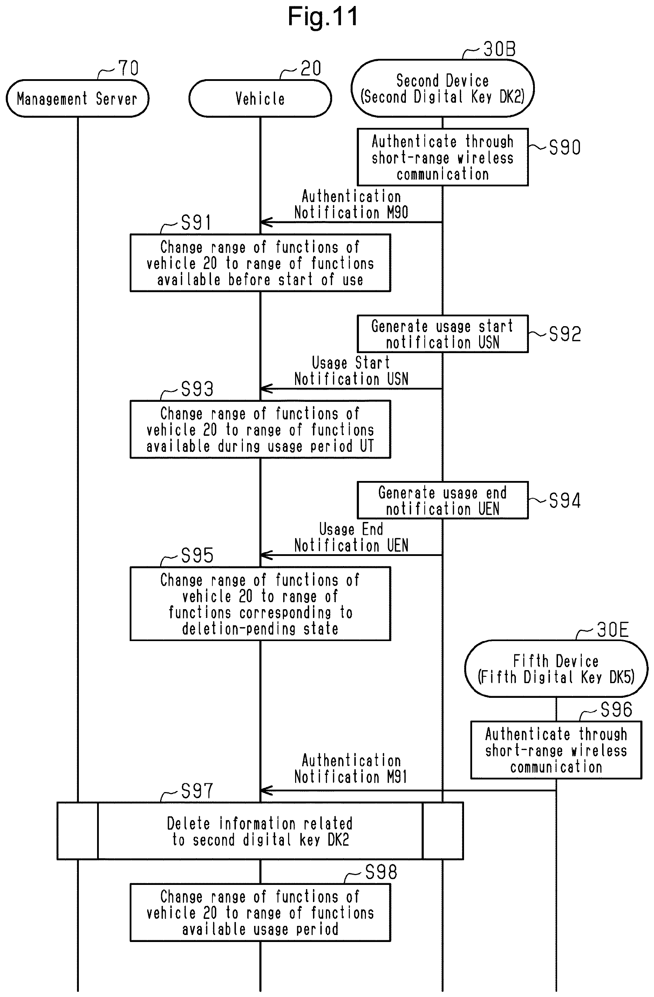

A vehicle 20 according to a third embodiment will now be described with reference to Fig. 11. The following describes the third embodiment, focusing on differences from the first embodiment. In the third embodiment, the vehicle 20 determines that the usage period UT has started upon receiving a usage start notification USN that has been output from a device 30. Upon receiving a usage end notification UEN output from the device 30, the vehicle 20 determines that the usage period UT has ended.

The vehicle 20 includes a communication device configured to wirelessly communicate with a device 30 that stores information relating to a digital key. Specifically, the vehicle 20 includes the BLE module 23, the UWB module 24, and the NFC module 25 as communication devices for performing short-range wireless communication. The vehicle 20 receives the usage start notification USN and the usage end notification UEN from the device 30 through at least one of the BLE communication, the UWB communication, and the NFC communication. The communication device used by the vehicle 20 to receive the usage start notification USN from the device 30 may be different from the communication device used by the vehicle 20 to receive the usage end notification UEN from the device 30. The following description focuses on differences from the first embodiment, and identical portions are briefly described or omitted.

As shown in Fig. 11, in step S90, the second device 30B that stores information relating to the second digital key DK2 generates authentication notification M90 for performing authentication through short-range wireless communication. Then, the second device 30B outputs the authentication notification M90 to the vehicle 20 through short-range wireless communication.

In step S91, the vehicle 20 authenticates the received authentication notification M90. Then, the vehicle 20 changes the range of functions of the vehicle 20 executable by the second digital key DK2 to the range of functions available before the start of use. Step S91 is identical to step S60 shown in Fig. 8, and thus will not be described in detail.

In step S92, the second device 30B generates the usage start notification USN. For example, the second device 30B generates the usage start notification USN when an operation to generate the usage start notification USN is performed by the user via the HMI 32 of the second device 30B. For example, the second device 30B may be configured to generate the usage start notification USN when the usage start time UST is reached. Then, the second device 30B outputs the usage start notification USN to the vehicle 20 through short-range wireless communication.

Upon receiving the usage start notification USN, the vehicle 20 performs the process of step S93. In step S93, the vehicle 20 determines that the usage period UT has started. That is, the vehicle 20 determines that the usage period UT has started upon receiving the usage start notification USN output from the device 30. In step S93, the vehicle 20 changes the range of functions of the vehicle 20 to the range of functions available during the usage period UT. Step S93 is identical to step S62 in the first embodiment, and thus will not be described in detail.

In step S94, the second device 30B generates the usage end notification UEN. For example, the second device 30B generates the usage end notification UEN when an operation to generate the usage end notification UEN is performed by the user via the HMI 32 of the second device 30B. For example, the second device 30B may be configured to generate the usage end notification UEN when the usage end time UET is reached. Then, the second device 30B outputs the usage end notification UEN to the vehicle 20 through short-range wireless communication.

Upon receiving the usage end notification UEN, the vehicle 20 performs the process of step S95. In step S95, the vehicle 20 determines that the usage period UT has ended. That is, upon receiving the usage end notification UEN output from the device 30, the vehicle 20 determines that the usage period UT has ended. In step S95, the vehicle 20 changes the range of functions of the vehicle 20 to the range of functions corresponding to the deletion-pending state. Step S95 is identical to step S64 shown in Fig. 8, and thus will not be described in detail.

The fifth device 30E is a device 30 that stores information relating to the fifth digital key DK5. Further, the fifth device 30E is another device 30 other than the second device 30B. In step S96, the fifth device 30E generates an authentication notification M91 for performing authentication through short-range wireless communication. Then, the fifth device 30E outputs the authentication notification M91 to the vehicle 20 through short-range wireless communication.

Upon receiving the authentication notification M91 from the fifth device 30E, the vehicle 20 executes the process of step S97. In step S97, the vehicle 20 executes a process that deletes the information relating to the second digital key DK2 corresponding to the deletion-pending state. Step S97 is identical to step S66 shown in Fig. 8, and thus will not be described in detail. Then, the vehicle 20 proceeds to step S98.

In step S98, the vehicle 20 authenticates the received authentication notification M91. Subsequently, the vehicle 20 changes the range of functions of the vehicle 20 executable by the fifth digital key DK5 to the range of functions available before the start of use. Step S98 is identical to step S60 shown in Fig. 8, and thus will not be described in detail.

### Operation of the Third Embodiment

Each vehicle 20 includes the BLE module 23, the UWB module 24, and the NFC module 25 as communication devices configured to perform wireless communication with the second device 30B. The vehicle 20 determines that the usage period UT has started upon receiving the usage start notification USN output from the second device 30B. The vehicle 20 determines that the usage period UT has ended upon receiving the usage end notification UEN output from the second device 30B.

### Advantages of the Third Embodiment

The third embodiment provides the following advantages in addition to advantages (1-1) and (1-2) of the first embodiment.

(3-1) Each vehicle 20 is configured to determine that a usage period UT has started based on a usage start notification USN output from the second device 30B.

(3-2) Each vehicle 20 is configured to determine that a usage period UT has ended based on a usage end notification UEN output from the second device 30B.

### Fourth Embodiment

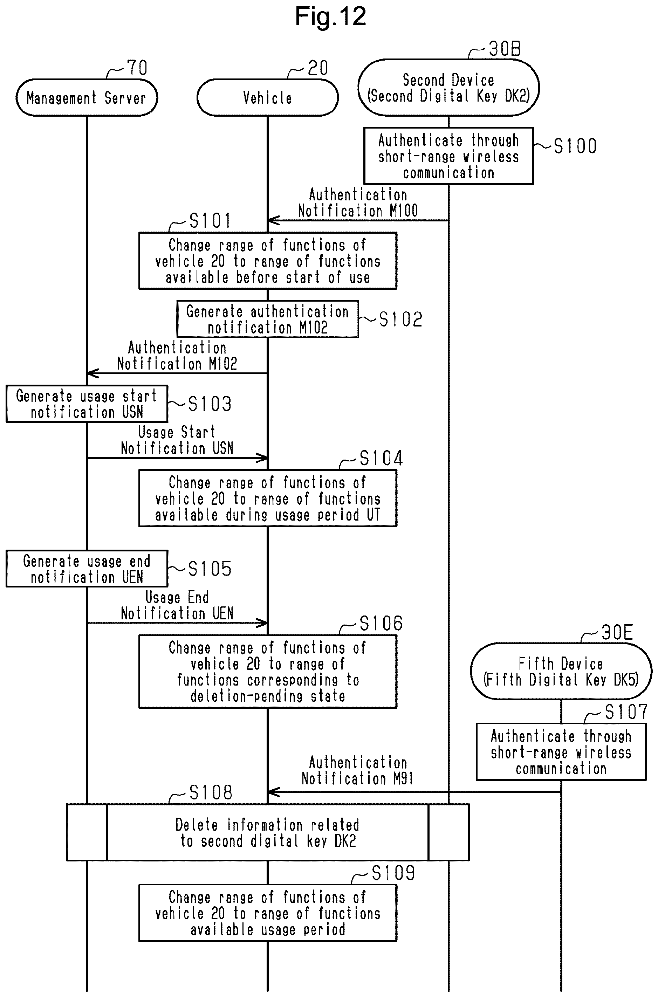

A vehicle 20 according to a fourth embodiment will now be described with reference to Fig. 12. The following describes the fourth embodiment, focusing on differences from the third embodiment. In the fourth embodiment, the vehicle 20 determines that the usage period UT has started upon receiving the usage start notification USN output from the management server 70. Upon receiving the usage end notification UEN output from the management server 70, the vehicle 20 determines that the usage period UT has ended.

The vehicle 20 includes a communication device configured to perform wireless communication with the management server 70. Specifically, the vehicle 20 includes the communication module 21 as the communication device. The vehicle 20 receives the usage start notification USN and the usage end notification UEN from the management server 70 via the communication module 21. The following description focuses on differences from the other embodiments, and identical portions are briefly described or omitted.

As shown in Fig. 12, in step S100, the second device 30B that stores information relating to the second digital key DK2 generates authentication notification M100 for performing authentication through short-range wireless communication. Then, the second device 30B outputs the authentication notification M100 to the vehicle 20 through short-range wireless communication.

In step S101, the vehicle 20 authenticates the received authentication notification M100. Then, the vehicle 20 changes the range of functions of the vehicle 20 executable by the second digital key DK2 to the range of functions available before the start of use. Step S101 is identical to step S60 shown in Fig. 8, and thus will not be described in detail. Then, the vehicle 20 proceeds to step S102.

In the process of step S102, the vehicle 20 generates an authentication notification M102, indicating that the second device 30B has been authenticated. After generating the authentication notification M102, the vehicle 20 transmits the generated authentication notification M102 to the management server 70 via the communication module 21.

After receiving the authentication notification M102, the management server 70 executes the process of step S103. In step S103, the management server 70 generates the usage start notification USN. Then, the management server 70 outputs the usage start notification USN to the vehicle 20 using the communication module 73.

Upon receiving the usage start notification USN, the vehicle 20 performs the process of step S104. In step S104, the vehicle 20 determines that the usage period UT has started. That is, the vehicle 20 determines that the usage period UT has started upon receiving the usage start notification USN output from the management server 70. In step S104, the vehicle 20 changes the range of functions of the vehicle 20 to the range of functions available during the usage period UT. Step S104 is identical to step S62 shown in Fig. 8, and thus will not be described in detail.

In step S105, the management server 70 generates the usage end notification UEN. For example, the management server 70 generates the usage end notification UEN when the usage end time UET is reached. Then, the management server 70 outputs the usage end notification UEN to the vehicle 20 using the communication module 73.

Upon receiving the usage end notification UEN, the vehicle 20 performs the process of step S106. In step S106, the vehicle 20 determines that the usage period UT has ended. That is, upon receiving the usage end notification UEN output from the management server 70, the vehicle 20 determines that the usage period UT has ended. In step S106, the vehicle 20 changes the range of functions of the vehicle 20 to the range of functions corresponding to the deletion-pending state. Step S106 is identical to step S64 shown in Fig. 8, and thus will not be described in detail.

The subsequent processes are identical to those of the third embodiment, and thus will not be described in detail. Specifically, step S107 shown in Fig. 12 is identical to step S96 shown in Fig. 11 and thus will not be described in detail. Step S108 shown in Fig. 12 is identical to step S97 shown in Fig. 11 and thus will not be described in detail. Step S109 shown in Fig. 12 is identical to step S98 shown in Fig. 11 and thus will not be described in detail.

### Operation of the Fourth Embodiment

Each vehicle 20 includes the corresponding communication module 21 as a communication device configured to perform wireless communication with the management server 70. That is, upon receiving a usage start notification USN output from the management server 70, the vehicle 20 determines that the usage period UT has started. Upon receiving a usage end notification UEN output from the management server 70, the vehicle 20 determines that the usage period UT has ended.

### Advantages of the Fourth Embodiment

The fourth embodiment provides the following advantages in addition to advantages (1-1) and (1-2) of the first embodiment.

(4-1) Each vehicle 20 is configured to determine that the usage period UT has started based on the usage start notification USN output from the management server 70.

(4-2) Each vehicle 20 is configured to determine that the usage period UT has ended based on the usage end notification UEN output from the management server 70.

### Fifth Embodiment

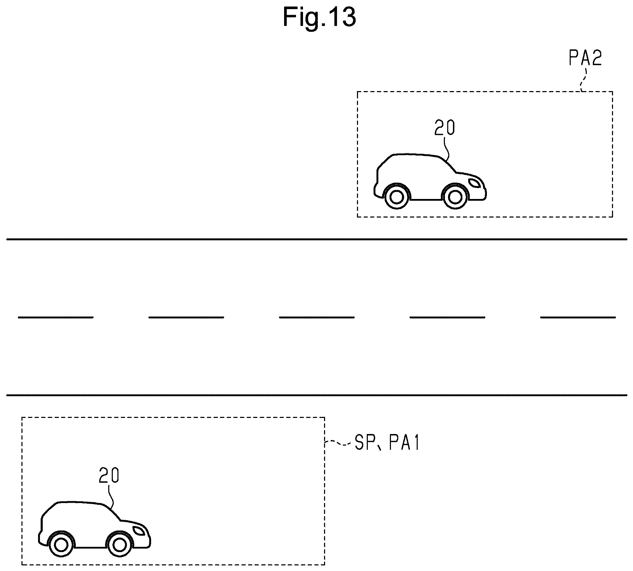

A vehicle 20 according to a fifth embodiment will now be described with reference to Fig. 13. The following describes the fifth embodiment, focusing on differences from the first embodiment. The following description focuses on differences from the first embodiment, and identical portions are briefly described or omitted.

In the fifth embodiment, the vehicle 20 acquires the current position of the vehicle 20. For example, the vehicle 20 may be configured to acquire the position of the vehicle 20 from a device 30 authenticated by the vehicle 20. Specifically, the device 30 authenticated by the vehicle 20 acquires the position information of the device 30. The vehicle 20 performs short-range wireless communication to acquire the position information acquired by the device 30. The vehicle 20 regards the position of the device 30 as that of the vehicle 20. The vehicle 20 may acquire the position of the vehicle 20 from the management server 70 via the communication module 21.

For example, a vehicle 20 may be configured to acquire the position of the vehicle 20 from a position information acquisition system included in the vehicle 20. Examples of the position information acquisition system include a global navigation satellite system (GNSS), a real-time kinematic (RTK), and light detection and ranging (LiDAR). A vehicle 20 may be configured to acquire the position of the vehicle 20 from images of the surroundings of the vehicle 20 captured by an external camera mounted on the vehicle 20.

When a vehicle 20 is located within a predetermined specific area SP in periods other than the usage period UT, a part of the range of functions of the vehicle 20 is enabled. When a vehicle 20 is located outside the specific area SP in periods other than the usage period UT, the functions of the vehicle 20 are disabled.

### Operation of the Fifth Embodiment

As shown in Fig. 13, the specific area SP is a predetermined first parking lot PA1, and a second parking lot PA2 is located outside the specific area SP.

When a vehicle 20 is located within the second parking lot PA2 in periods other than the usage period UT of the vehicle 20, the vehicle 20 does not allow the user of a digital key authenticated by the vehicle 20 to use the functions of the vehicle 20.

When a vehicle 20 is located within the first parking lot PA1 in periods other than the usage period UT of the vehicle 20, the vehicle 20 allows the user of a digital key authenticated by the vehicle 20 to use a part of the range of functions of the vehicle 20. For example, a vehicle 20 enables the user of the digital key authenticated by the vehicle 20 to use functions that are not relating to driving the vehicle 20.

Even in periods other than the usage period UT, there is a need among users of a vehicle 20 for the convenience of, for example, unlocking a door of the vehicle 20 in order to load or unload luggage in the specific area SP such as a predetermined parking lot. Further, in periods other than the usage period UT, there is a need of the owner of a vehicle 20 to avoid unlimited use of the vehicle 20.

### Advantage of the Fifth Embodiment

The fifth embodiment provides the following advantage in addition to advantages (1-1) and (1-2) of the first embodiment.

(5-1) Each vehicle 20 satisfies both the need of the user of the vehicle 20 and the need of the owner of the vehicle 20.

### Modifications of the Fifth Embodiment

The fifth embodiment may be modified as follows.

The specific area SP is not limited to the first parking lot PA1. The specific area SP may be set in any area.

### Modifications

The following are modifications commonly applicable to the above embodiments. The following modifications can be combined as long as the combined modifications remain technically consistent with each other.

### Change to Range of Functions

In periods other than the usage period UT, a vehicle 20 may change the range of functions of the vehicle 20 so that both the functions relating to driving the vehicle 20 and the functions that are not relating to driving the vehicle 20 are disabled.

The range of functions of a vehicle 20 available before the start of the usage period UT, those available during the usage period, and those available after the end of the usage period UT may each be set to a different range of functions.

### Usage Period UT

Determination as to whether the usage period UT has started and determination as to whether the usage period UT has ended in each embodiment may be combined with each other. For example, a vehicle 20 may determine that the usage period UT has started when the usage start time UST is reached, and may determine that the usage period UT has ended when an operation to end use of the vehicle 20 is performed via the HMI 22. For example, a vehicle 20 may determine that the usage period UT has started upon receiving the usage start notification USN output from the second devices 30B, and may determine that the usage period UT has ended when the usage end time UET is reached.

The storage device 28 of a vehicle 20 may store multiple conditions for determining that the usage period UT has started. The execution device 27 of a vehicle 20 may determine that the usage period UT has started when at least one of the conditions for determining that the usage period UT has started is satisfied. The execution device 27 of a vehicle 20 may determine that the usage period UT has started when all the conditions for determining that the usage period UT has started are satisfied. The execution device 27 of a vehicle 20 may determine that the usage period UT has started when half of the conditions for determining that the usage period UT has started are satisfied.

The storage device 28 of a vehicle 20 may store multiple conditions for determining that the usage period UT has ended. The execution device 27 of a vehicle 20 may determine that the usage period UT has ended when at least one of the conditions for determining that the usage period UT has ended is satisfied. The execution device 27 of a vehicle 20 may determine that the usage period UT has ended when all the conditions for determining that the usage period UT has ended are satisfied. The execution device 27 of a vehicle 20 may determine that the usage period UT has ended when half of the conditions for determining that the usage period UT has ended are satisfied.

### Authentication Notification M91

The other device 30 that transmits the authentication notification M91 is not limited to the fifth device 30E. The other device 30 that transmits the authentication notification M91 may be a friend device 51 other than the fifth device 30E. The other device 30 that transmits the authentication notification M91 may be a guest device 52.

### Management System 10

Each vehicle 20 may lack at least one of the BLE module 23, the UWB module 24, and the NFC module 25. The vehicle 20 is capable of performing short-range wireless communication with a device 30 as long as it includes at least one module. The vehicle 20 may include modules other than those listed above, provided that it includes a module capable of performing short-range wireless communication with the device 30.

An ECU different from the vehicle management device 26 among the ECUs included in the vehicle 20 may authenticate a digital key.

The digital key-related aspects of the above embodiments do not have to be compliant with the CCC standard.

The vehicle management device 26 is not limited to a digital key ECU. The vehicle management device 26 may be, for example, a central ECU that integrally manages multiple ECUs included in the vehicle 20.

In the above embodiments, the vehicle management device 26 is provided with the execution device 27, which is processing circuitry including one or more processors that run computer programs (software) to execute various processes. However, the execution device 27 may be provided with processing circuitry including one or more dedicated hardware circuits, such as application-specific integrated circuits (ASICs) that execute at least some of the processes. Alternatively, the execution device 27 may be provided with processing circuitry including a combination of one or more processors and one or more dedicated hardware circuits. The processor includes a CPU and a memory, such as a RAM and a ROM. The memory stores program codes or instructions configured to cause the CPU to execute the processes. The memory, or a computer-readable medium, includes any type of medium that is accessible by general-purpose computers and dedicated computers. The same applies to the execution device 36 of a device 30 and the execution device 71 of the management server 70.

The devices 30 are not limited to smartphones. The devices 30 may be smartwatches. Further, the devices 30 may be predetermined servers. In this case, the devices 30 may be included in a predetermined server. For example, when the owner of a vehicle 20 is a rental service provider or a sharing service provider, the owner device 40 may be included in the predetermined server. Further, for example, friend devices 51 may be included in the predetermined server.

In the above embodiments, digital keys are arranged in a hierarchy consisting of, in descending order, an owner key KO, a friend key KF, and a guest key KN, such that digital keys with higher hierarchy levels are assigned greater permission levels. However, digital keys with higher hierarchy levels do not have to be assigned greater permission levels. For example, the same level of permission may be set for the three hierarchies of an owner key KO, a friend key KF, and a guest key KN.

Each shareable device 50 functions to receive the shareable key KS as in the above embodiments. A device 30 configured to receive a digital key, such as a shareable device 50, may be referred to as a receiver device.

A separate device server 60 does not have to be provided for each type of device 30. It is sufficient that multiple devices 30 and the management server 70 can wirelessly communicate with each other. The device server 60 may lack the management system 10. In the management system 10, it is sufficient that multiple devices 30 and the management server 70 can communicate directly via wireless communication.

The management server 70 may include multiple servers. For example, the management server 70 may include a server that stores the database DB and a server that executes the server program PS. In addition, for example, the management server 70 may include a server that communicates with a vehicle 20 and a server that communicates with the device server 60, and these servers may communicate with each other.

The management server 70 does not have to store the database DB. It is sufficient that the management server 70 manages at least a combination of the key information DK of a device 30 and the authentication information AT of the vehicle management device 26 for one digital key in the management system 10.

Deleting a digital key means shifting the digital key from a usable state to an unusable state. In the above embodiments, a digital key is shifted to an unusable state by deleting either corresponding authentication information AT or corresponding key information DK.

Accordingly, deleting a digital key means deleting at least one of the authentication information AT relating to a digital key stored in the vehicle management device 26, and the key information DK relating to a digital key stored in the device 30. When both the key authentication information AT and the key information DK are deleted, the digital key is deleted at the point in time when either the key authentication information AT or the key information DK is first deleted.

### Various Types of Information

The information relating to a digital key stored in the vehicle management device 26 is not limited to the authentication information AT, and may be any information relating to the digital key. For example, the information relating to a digital key may include information used to identify the digital key.

The information relating to a digital key stored in a device 30 is not limited to the key information DK, and may include any information relating to the digital key. For example, the information relating to a digital key may include information used to identify the digital key.

As in the above embodiments, the information relating to a digital key stored in a vehicle management device 26 may differ from the information relating to a digital key stored in a device 30, or may match it.

The authentication information AT is not limited to the examples of the above embodiments as long as it is used to authenticate a digital key during use. For example, the authentication information AT may be a common key shared by a vehicle management device 26 and a device 30. For example, the authentication information AT may be a shared secret key.

The structure of information included in the key information DK is not limited to the examples described in the above embodiments. For example, the owner key information DKO does not have to include the slot identification information ST4. For example, the key information DK may include information indicating the type of digital key. The information indicating the type of digital key indicates, for example, one of an owner key KO, a friend key KF, and a guest key KN.

The management system 10 may include information indicating the type of device 30 in the database DB. The information indicating the type of device 30 indicates, for example, any one of a smartphone, a smartwatch, and a predetermined server as in the above-described modifications.

The structure of the data DA in the database DB is not limited to the examples of the above embodiments. The database DB may be modified as long as it includes information necessary for the management server 70 to perform management in the management system 10.

In the database DB, permission does not have to be uniformly defined according to the type of digital key, and may instead be set individually for each digital key. In the database DB, the permission of a digital key does not have to be defined.

### Series of Processes for Registering Digital Keys

The series of processes for registering an owner key KO is not limited to the examples of the above embodiments. For example, even if pairing through the process of step S12 is not performed, the owner device 40 may store the owner key information DKO by exchanging information such as the generation data DC between the vehicle 20 and the first device 30A via the management server 70. The series of processes for registering an owner key KO may be modified to align with the structure of the information included in the owner key information DKO and the structure of the information included in the authentication information AT.

The series of processes for registering a friend key KF is not limited to the examples of the above embodiments. For example, the management server 70 may update the database DB through the process of step S29 after transmitting the authentication package ATP and the storage request D24 to the vehicle 20. The series of processes for registering a friend key KF may be modified to align with the structure of the information included in the friend key information DKF and the structure of the information included in the authentication information AT.

The series of processes for registering a guest key KN is not limited to the examples of the above embodiments. The sequence of the series of processes for registering a guest key KN may differ from the sequence of the series of processes for registering a friend key KF. The series of processes for registering a guest key KN may be modified to align with the structure of the information included in the guest key information DKN and the structure of the information included in the authentication information AT.

The guest key KN does not have to be a type of digital key. That is, the friend key KF may be the only shareable key KS in the management system 10. In this case, the digital key to be processed may be the owner key KO, and the digital key registered based on the digital key to be processed may be the friend key KF.

A guest device 52 may be configured to transmit a request for registration of a new guest key KN. In other words, a shareable device 50 may transmit a request to register a new guest key KN regardless of whether it is a friend device 51 or a guest device 52.

Various changes in form and details may be made to the examples above without departing from the spirit and scope of the claims and their equivalents. The examples are for the sake of description only, and not for purposes of limitation. Descriptions of features in each example are to be considered as being applicable to similar features or aspects in other examples. Suitable results may be achieved if sequences are performed in a different order, and/or if components in a described system, architecture, device, or circuit are combined differently, and/or replaced or supplemented by other components or their equivalents. The scope of the disclosure is not defined by the detailed description, but by the claims and their equivalents. All variations within the scope of the claims and their equivalents are included in the disclosure.

## Claims

1. A vehicle (20), wherein a device (30) configured to store information relating to a digital key is registered as the digital key, the vehicle (20) comprising:
a storage device (28) configured to store a range of functions of the vehicle executable by the digital key; and
an execution device (27) configured to change the range of functions of the vehicle executable by the digital key during periods other than a usage period to be narrower than the range of functions of the vehicle executable by the digital key during the usage period, the usage period being a period in which a user of the digital key uses the vehicle (20).

2. The vehicle (20) according to claim 1, wherein
the storage device (28) stores a usage end time at which the usage period ends, and
the execution device (27) is configured to determine that the usage period has ended when the usage end time is reached.

3. The vehicle (20) according to claim 1 or 2, further comprising an interface (22) operable by the user, wherein
the execution device (27) is configured to determine that the usage period has ended when an operation to end use of the vehicle (20) is performed through the interface (22).

4. The vehicle (20) according to any one of claims 1 to 3, further comprising a communication device (23, 24, 25) configured to communicate with the device (30), wherein
the execution device (27) is configured to determine that the usage period has ended upon receiving a usage end notification output from the device (30).

5. The vehicle (20) according to any one of claims 1 to 4, further comprising a communication device (21) configured to communicate with a management server (70) configured to manage the digital key, wherein
the execution device (27) is configured to determine that the usage period has ended upon receiving a usage end notification output from the management server (70).

6. The vehicle (20) according to any one of claims 1 to 5, wherein
the storage device (28) stores a usage start time at which the usage period starts, and
the execution device (27) is configured to determine that the usage period has started when the usage start time is reached.

7. The vehicle (20) according to any one of claims 1 to 6, further comprising an interface (22) operable by the user, wherein
the execution device (27) is configured to determine that the usage period has started when an operation to start use of the vehicle (20) is performed through the interface (22).

8. The vehicle (20) according to any one of claims 1 to 7, further comprising a communication device (23, 24, 25) configured to communicate with the device (30), wherein
the execution device (27) is configured to determine that the usage period has started upon receiving a usage start notification output from the device (30).

9. The vehicle (20) according to any one of claims 1 to 8, further comprising a communication device (21) configured to communicate with a management server (70) configured to manage the digital key, wherein
the execution device (27) is configured to determine that the usage period has started upon receiving a usage start notification output from the management server (70).

10. The vehicle (20) according to any one of claims 1 to 9, wherein
the range of functions of the vehicle (20) includes a function relating to driving the vehicle (20) and a function that is not relating to driving the vehicle (20), and
the execution device (27) is configured to change the range of functions of the vehicle (20) such that the user is prevented from using the function relating to driving the vehicle (20) during periods other than the usage period.

11. The vehicle (20) according to any one of claims 1 to 10, wherein the execution device (27) is configured to:
in periods other than the usage period, when the vehicle (20) is located within a predetermined specific area, enable a part of the range of the functions of the vehicle (20); and
in periods other than the usage period, when the vehicle (20) is located outside the specific area, disable the functions of the vehicle (20).

12. The vehicle (20) according to claim 11, wherein
the specific area is a predetermined parking lot.
